# EUROPÄISCHE PATENTSCHRIFT

(11) **EP 2 306 428 B1**
(45) Veröffentlichungstag und Bekanntmachung des Hinweises auf die Patenterteilung: **09.11.2011**
(21) Anmeldenummer: 09450188.9
(22) Anmeldetag: 01.10.2009
(51) Int. Cl.: G08G 1/04, G08G 1/052, G08G 1/056, G01B 11/25

(54) **Vorrichtungen und Verfahren zur Bestimmung von Richtung, Geschwindigkeit und/oder Abstand von Fahrzeugen**
Device and method for determining the direction, speed and/or distance of vehicles
Dispositif et procédé destinés à la détermination de la direction, de la vitesse et/ou de la distance d'un véhicule

(43) Veröffentlichungstag der Anmeldung: 06.04.2011
(73) Patentinhaber: Kapsch TrafficCom AG, 1120 Wien (AT)
(72) Erfinder: Leopold, Alexander, 1100 Wien (AT); Schechora, Andreas, 2700 Wiener Neustadt (AT); Nagy, Oliver, 1190 Wien (AT)
(74) Vertreter: Weiser, Andreas

(56) Entgegenhaltungen:
- EP-A2- 1 048 961
- US-A1- 2002 140 924
- US-A1- 2003 062 416
- XIAO CHEN HE ET AL: "A Novel Algorithm for Estimating Vehicle Speed from Two Consecutive Images" APPLICATIONS OF COMPUTER VISION, 2007. WACV '07. IEEE WORKSHOP ON, IEEE, PI, 1. Februar 2007 (2007-02-01), Seiten 12-12, XP031055121 ISBN: 978-0-7695-2794-9

## Beschreibung

Die vorliegende Erfindung betrifft Vorrichtungen und Verfahren zur Bestimmung von Richtung, Geschwindigkeit und/oder Abstand von Fahrzeugen auf einer Fahrbahn.

Die Bestimmung der Richtung und Geschwindigkeit eines Fahrzeugs ist in der Verkehrsüberwachung und -sicherung für die Detektion von Geisterfahrern und die Einhaltung von Geschwindigkeitsbeschränkungen von entscheidender Bedeutung. Die Bestimmung des Abstands von Fahrzeugen wird beispielsweise in Tunnels angewandt, um die Einhaltung von Mindestabständen zur Vermeidung von Auffahrunfällen zu gewährleisten.

Zur Bestimmung von Richtung, Geschwindigkeit bzw. Abstand von Fahrzeugen sind derzeit verschiedenste Systeme im Einsatz, wie die Verwendung von Lichtschranken, in die Fahrbahn eingebettete Induktionsschleifen, Radar- oder Laserscanner usw. Allen bekannten Systemen ist gemeinsam, daß sie überaus aufwendig sind: Induktionsschleifen erfordern ein Öffnen der Fahrbahnoberfläche, Lichtschranken benötigen Installationen an beiden Fahrbahnrändern, und Radar- bzw. Laserscanner sind konstruktiv aufwendig, kostspielig und geben gegebenenfalls unerwünschte elektromagnetische Störstrahlung ab. So ist aus US 2002/0140924 A1 ein Laserscanner bekannt, der zwar die Oberflächenkontur eines Fahrzeugs detektiert und darüber dessen Geschwindigkeitsmessung ermöglicht, jedoch eine aufwendige mechanische und optische Konstruktion erfordert.

Die Erfindung setzt sich zum Ziel, Vorrichtungen und Verfahren zur Bestimmung der Richtung, Geschwindigkeit und/oder des Abstands von Fahrzeugen zu schaffen, welche einfacher realisierbar sind als die bekannten Lösungen.

Dieses Ziel wird in einem ersten Aspekt der Erfindung mit einer Vorrichtung erreicht, die sich durch einen nach dem Lichtschnitt-Verfahren arbeitenden, auf die Fahrbahn gerichteten Sensor zur Aufnahme der Oberflächenkontur eines Fahrzeugs und eine an den Sensor angeschlossene Auswerteeinrichtung auszeichnet, welche aus dem Versatz der Oberflächenkontur in zwei zeitlich aufeinanderfolgenden Aufnahmen die Richtung und/oder Geschwindigkeit des Fahrzeugs ermittelt.

In einem zweiten Aspekt wird das Ziel der Erfindung mit einer Vorrichtung erreicht, die sich durch einen nach dem Lichtschnitt-Verfahren arbeitenden, auf einen Abschnitt der Fahrbahn gerichteten Sensor zur.Aufnahme der Oberflächenkonturen von Fahrzeugen im Abschnitt sowie eine an den Sensor angeschlossene Auswerteeinrichtung auszeichnet, welche aus den Oberflächenkonturen den Abstand aufeinanderfolgender Fahrzeuge ermittelt.

Auf diese Weise wird erstmals das in der Technik bekannte Lichtschnitt-Verfahren für die Fahrtrichtungs-, Geschwindigkeits- und Abstandsbestimmung von Fahrzeugen eingesetzt. Lichtschnitt-Sensoren projizieren strukturiertes Licht, z.B. eine einzige Lichtlinie ("Lichtfächer" bzw. "Lichtstrich"), eine Vielzahl paralleler Lichtlinien ("Lichtfransen", sog. "fringe projection") oder gleich ein ganzes Lichtgitter unter einem ersten Winkel auf ein zu erfassendes Objekt und nehmen das Objekt mit der darauf projizierten Struktur aus einem von der Projektionsrichtung abweichenden Winkel auf, wodurch aus den Verzerrungen der Struktur im aufgenommenen Bild die Oberflächenkontur des Objekts ermittelt werden kann.

Die Vorrichtungen der Erfindung erfordern keinerlei Einbauten in der Fahrbahn, können auf lediglich einer einzigen Seite der Fahrbahn montiert werden und benötigen im Vergleich zu Radar- oder Laserscananlagen nur sehr einfache Lichtprojektions-, Kamera- und Bildverarbeitungsmittel.

Demgemäß umfaßt der Sensor zumindest einen Lichtmusterprojektor, der von einem ersten Ort aus ein Lichtmuster, bevorzugt Lichtgitter, auf die Fahrbahn projiziert, sowie eine Kamera, die von einem zweiten Ort aus das projizierte Lichtmuster aufnimmt und aus dessen Verzerrungen die Oberflächenkontur aufnimmt, wie in der Technik bekannt.

Eine besonders vorteilhafte Ausführungsform der Abstandsbestimmungsvorrichtung für Fahrbahnen in einem Tunnel zeichnet sich dadurch aus, daß an der Decke des Tunnels mehrere Lichtmusterprojektoren aufeinanderfolgend montiert sind, welche ein Lichtgitter auf die Fahrbahn projizieren, das von einer gemeinsamen Kamera aufgenommen ist. Die Tunneldecke kann auf diese Weise zur Montage der Lichtmusterprojektoren herangezogen und damit ein großer Abschnitt, wenn nicht sogar der gesamte Tunnel, mit einem Lichtgitter bestrahlt werden.

Besonders günstig ist es, wenn der Lichtmusterprojektor ein Laser- oder Leuchtdiodenstrahler ist, wodurch hohe Leuchtdichten erzielt werden können.

Die Erfindung eröffnet insbesondere auch die Möglichkeit, als Kamera eine bereits vorhandene Verkehrsüberwachungskamera einzusetzen, was den konstruktiven Aufwand weiter reduziert.

In einem dritten Aspekt erreicht die Erfindung ihre Ziele mit einem Verfahren zur Bestimmung von Richtung und/oder Geschwindigkeit eines Fahrzeugs auf einer Fahrbahn, mit den Schritten
a) Projizieren eines Lichtmusters, bevorzugt Lichtgitters, auf die Fahrbahn von einem ersten Ort aus und Aufnehmen des projizierten Lichtmusters von einem zweiten Ort aus, um eine erste Aufnahme der Oberflächenkontur eines Fahrzeugs aus Verzerrungen des Lichtmusters zu erstellen,
b) Wiederholen von Schritt a) zu einem späteren Zeitpunkt, um eine zweite Aufnahme der Oberflächenkontur des Fahrzeugs zu erstellen,
c) Ermitteln der Richtung und Geschwindigkeit des Fahrzeugs aus dem Versatz seiner Oberflächenkontur in den beiden Aufnahmen.

In einem vierten Aspekt schafft die Erfindung ein Verfahren zur Bestimmung des Abstands von Fahrzeugen auf einer Fahrbahn, mit den Schritten

Projizieren eines Lichtmusters, bevorzugt Lichtgitters, auf einen Abschnitt der Fahrbahn von zumindest einem ersten Ort aus,

Aufnehmen des projizierten Lichtmusters von einem zweiten Ort aus, um die Oberflächenkonturen von Fahrzeugen im Abschnitt aus Verzerrungen des Lichtmusters zu erfassen, und

Ermitteln des Abstands aufeinanderfolgender Fahrzeuge im Abschnitt aus den erfaßten Oberflächenkonturen.

Hinsichtlich der Vorteile und weiterer Merkmale der erfindungsgemäßen Verfahren wird auf die obigen Ausführungen zu den Vorrichtungen der Erfindung verwiesen.

Auf großen Verkehrsflächen können mehrere Sensoren bzw. Vorrichtungen eingesetzt werden, die im Verbund arbeiten und Bewegung von Fahrzeugen verfolgen.

Die Erfindung wird nachstehend anhand von in den beigeschlossenen Zeichnungen dargestellten Ausführungsbeispielen näher erläutert. In den Zeichnungen zeigt:
Fig. 1 die Vorrichtung und das Verfahren der Erfindung zur Richtungs- und/oder Geschwindigkeitsbestimmung eines Fahrzeugs anhand einer schematischen Perspektivansicht der Vorrichtung;
Fig. 2 zwei zeitlich aufeinanderfolgende Aufnahmen des auf die Fahrbahn projizierten Lichtmusters bei der Passage eines Fahrzeugs auf der Fahrbahn;
Fig. 3 die Vorrichtung und das Verfahren der Erfindung zur Abstandsbestimmung von Fahrzeugen in einem Tunnel anhand einer schematischen Perspektivansicht der Vorrichtung; und
Fig. 4 eine Aufnahme einer mit der Vorrichtung von Fig. 3 ermittelten Oberflächenkontur von Fahrzeugen im Tunnel.

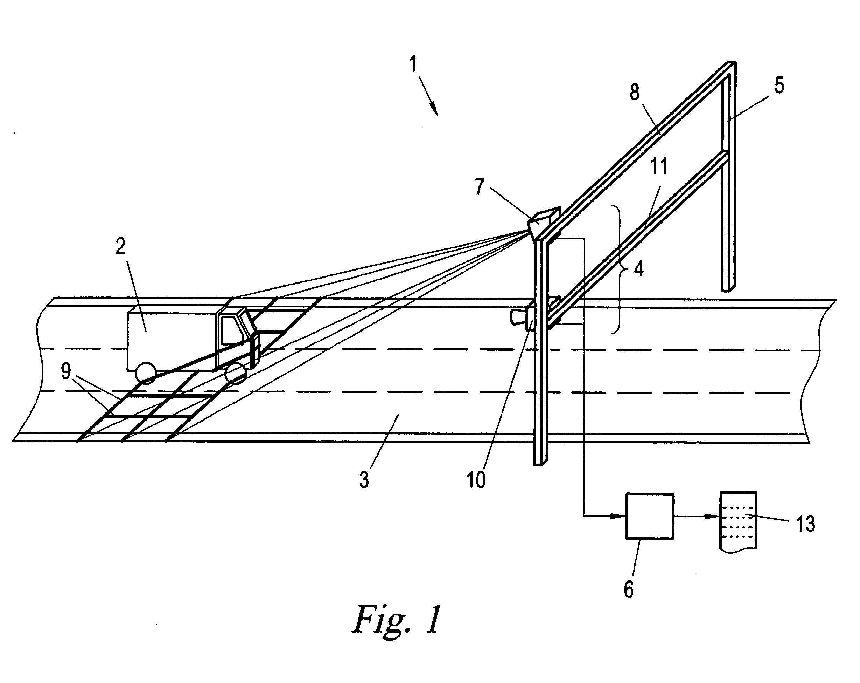

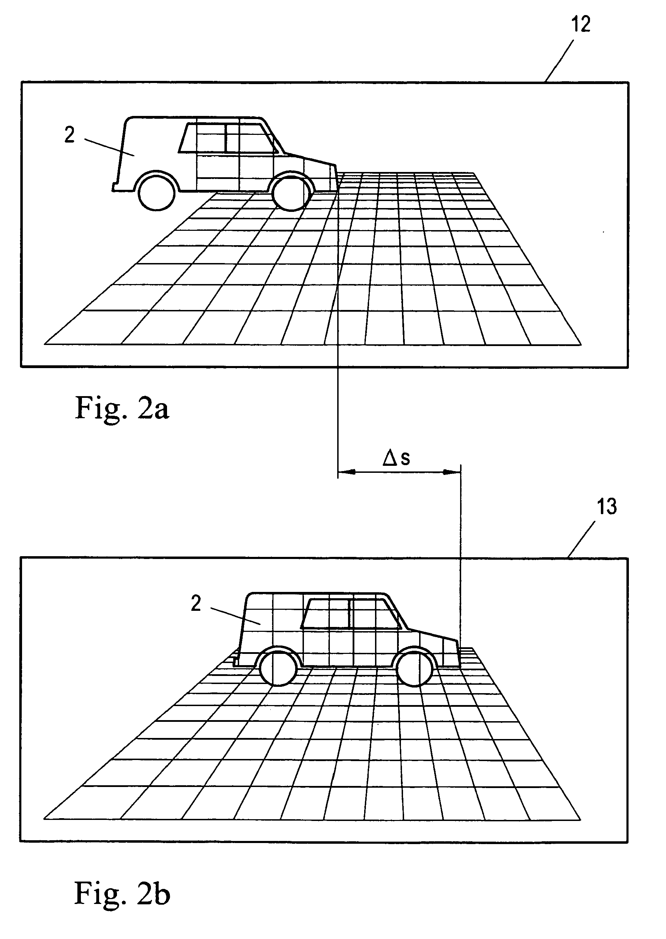

In Fig. 1 ist eine Vorrichtung 1 zur Bestimmung der Richtung und/oder Geschwindigkeit eines Fahrzeugs 2 auf einer Fahrbahn 3 gezeigt. Die Vorrichtung 1 weist einen nach dem Lichtschnitt-Verfahren arbeitenden Sensor 4 auf, der an einem die Fahrbahn 3 überspannenden Brückenträger 5 montiert und an eine Auswerteeinrichtung 6 angeschlossen ist. Der Sensor 4 umfaßt einerseits einen Lichtmusterprojektor 7, der von einem ersten Ort - hier einem oberen Träger 8 der Brücke 5 - ein Lichtmuster 9 auf die Fahrbahn 3 projiziert, und anderseits eine Kamera 10, welche von einem zweiten Ort aus - hier einem unteren Träger 11 der Brücke 5 - ein Bild 12, 13 des projizierten Lichtmusters 9 aufnimmt, wie es in den Fig. 2a und 2b für zwei aufeinanderfolgende Zeitpunkte gezeigt ist.

Zu jedem dieser Zeitpunkte ermittelt die Auswerteeinrichtung 6 aus den Verzerrungen des Lichtmusters 9 in den Bildern 12, 13, wie sie durch das Oberflächenrelief eines Fahrzeugs 2 aus dem von der Lichtprojektionsrichtung abweichenden Blickwinkel der Kamera 8 erscheinen, die Oberflächenkontur des Fahrzeugs 2.

Aus dem Versatz Δs der Oberflächenkontur des Fahrzeugs 2 in den beiden Aufnahmen 12, 13 bestimmt die Auswerteeinrichtung 6 anschließend die Richtung bzw. - unter Berücksichtigung des Zeitabstandes Δt zwischen den beiden Aufnahmen 12, 13 - die Geschwindigkeit v = Δs/Δt des Fahrzeugs 2.

Das Lichtmuster 9 kann sowohl eine einzelne Lichtlinie ("Lichtstrich"), eine Gruppe paralleler Lichtlinien ("Lichtfransen", "fringe projection") als auch ein Lichtgitter sein, wie es in Fig. 2 gezeigt ist. Das Lichtmuster 9 kann beispielsweise aus einem Gitter von jeweils um 1 m beabstandeten Lichtlinien bestehen. Auch andere Arten von Lichtmustern 9 sind möglich, beispielsweise Rauten- oder Kreismuster oder andere Projektionsformen.

Als Lichtmusterprojektor 7 kann jede Art von Lichtquelle eingesetzt werden, welche in der Lage ist, das Lichtmuster 9 auszusenden. Besonders eignen sich hiefür Laserdiodenstrahler, deren Licht z.B. mit Linsen oder Blenden aufgefächert wird, oder Strahler, die aus Hochleistungs-Leuchtdiodengruppen zusammengesetzt sind.

Um den Kontrast des vom Lichtmusterprojektor 7 projizierten Lichtmusters 9 auch bei ungünstigen Umgebungslichtverhältnissen, z.B. direktem Sonnenlicht, zu verbessern, kann der Lichtmusterprojektor 7 optional gepulst und mit hoher Impulsspitzenleistung betrieben werden, wobei dann auch die Kamera 10 nur zu den Zeiten der Lichtimpulse des Lichtmusterprojektors 7 betrieben zu werden braucht.

Die Kamera 10 kann eine beliebige Foto- oder Videokamera sein. Bevorzugt wird als Kamera 10 eine bereits an der Fahrbahn 3 vorhandene Verkehrsüberwachungskamera eingesetzt, z.B. eine Kamera einer Straßenmautstation, welche zum Aufnehmen von Mautvergehen bestimmt ist.

Der bzw. die Lichtmusterprojektoren 7 und die Kamera 10 können an beliebigen unterschiedlichen Positionen angeordnet werden, solange das projizierte Lichtmuster 9 aus einer von seiner Projektionsrichtung abweichenden Richtung aufgenommen wird. Auch ist es möglich, mehr als einen Lichtmusterprojektor 7 an verschiedenen Positionen anzuordnen, z.B. um die Fahrbahn 3 bzw. das Fahrzeug 2 aus unterschiedlichen Winkeln zu beleuchten, um Abschattungen zu vermeiden.

Dabei kann das Lichtmuster 9 auch aus Projektionen mehrerer Lichtmusterprojektoren 7 zusammengesetzt sein, die beispielsweise kreuzende Scharen paralleler Lichtlinien ("Lichtfransen") auf die Fahrbahn projizieren. Damit die Kamera 10 bzw. die Auswerteeinrichtung 6 die Lichtlinien in den Bildern den einzelnen Lichtmusterprojektoren korrekt zuordnen kann, werden die Scharen beispielsweise mit unterschiedlichen Wellenlängen im Zeitmultiplex oder mit verschiedenen Modulationen oder Codierungen versehen ausgestrahlt, wie in der Technik bekannt.

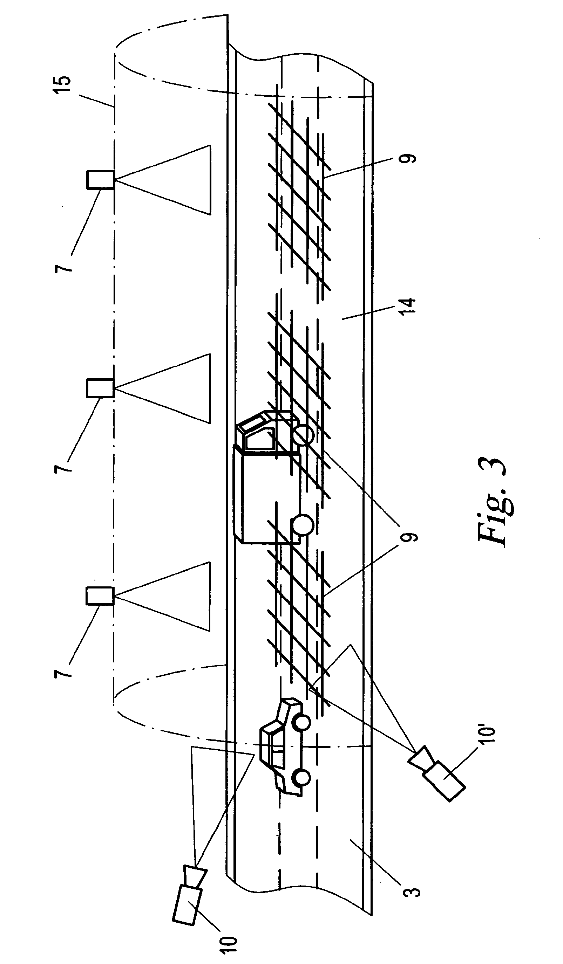

Fig. 3 zeigt eine derartige Variante, welche auch gleichzeitig - oder ausschließlich - zur Messung des Abstands von Fahrzeugen eingesetzt werden kann; es versteht sich jedoch, daß die hier unter Bezugnahme auf die Ausführungsform von Fig. 3 gezeigte Abstandsmessung auch nur mit einem einzigen Lichtmusterprojektor 7 durchgeführt werden könnte.

Im Detail zeigt Fig. 3 eine Fahrbahn 3, von der ein Abschnitt 14 in einem Tunnel 15 verläuft, an dessen Decke mehrere Lichtmusterprojektoren 7 aufeinanderfolgend montiert sind, um gemeinsam ein Lichtmuster 9, hier ein Lichtgitter, auf die Fahrbahn 3 zu projizieren. Im einfachsten Fall genügt eine einzige Kamera 10, welche gemeinsam mit den Lichtmusterprojektoren 7 den Lichtschnitt-Sensor 4 bildet und die Verzerrungen des Lichtmusters 9 durch passierende Fahrzeuge 2 im Abschnitt 14 beobachtet.

Die Kamera 10 kann beispielsweise von oben und hinten auf die Fahrbahn 3 blicken, oder - wie in der als Alternative eingezeichneten Variante 10' - von der Seite, beispielsweise mit Hilfe eines Weitwinkelobjektivs, um den gesamten Abschnitt 14 zu erblicken.

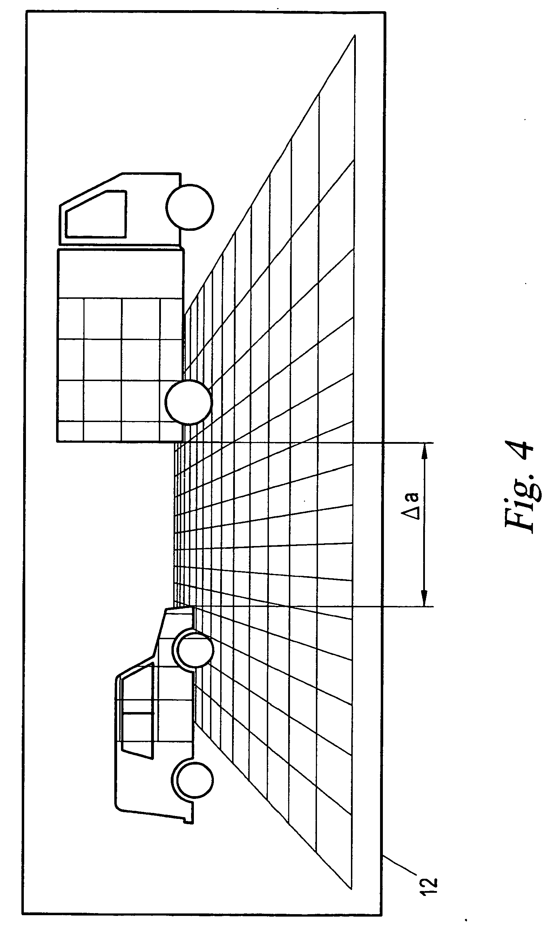

Aus dem Abstand Δa zweier auf diese Weise detektierter Oberflächenkonturen von Fahrzeugen 2 kann unmittelbar auf den Abstand der beiden Fahrzeuge 2 geschlossen werden. Fig. 4 zeigt ein von der Kamera 10' aufgenommenes Bild 12, aus dem der Abstand Δa mit Hilfe der Auswerteeinrichtung 6 ermittelt werden kann.

Der Lichtschnitt-Sensor 4 kann auch zur Erkennung der bloßen Anwesenheit eines Fahrzeugs 2 auf der Fahrbahn 3 herangezogen werden, um weitere Aktionen, z.B. eine anschließende Richtungs-, Geschwindigkeits- und/oder Abstandsbestimmung mit Hilfe der Vorrichtung 1, auszulösen. Für eine solche Auslösung braucht im einfachsten Fall nur eine einzige Lichtlinie projiziert und ihr Verlauf in den Bildern 12, 13 auf eine Störung überwacht werden, z.B. einen Knick oder eine Unterbrechung, was das Auftreten eines Fahrzeugs 2 anzeigt und mit sehr einfachen Bildverarbeitungsmitteln überwacht werden kann.

In gleicher Weise kann die Vorrichtung z.B. auch als Trigger-Einheit genützt werden kann, um das eigentliche Meßverfahren zu starten, d.h. die Beobachtung des projizierten Musters an einer Stelle kann den zweiten Verfahrensschritt (zweite Aufnahme) initiieren. Durch Kalibrieren der Auswerteeinrichtung auf den "leeren" bzw. "unbelegten" Zustand der Verkehrsfläche, wenn sich kein Fahrzeug auf der Verkehrsfläche befindet, kann dabei aus einer einen vorgegebenen Schwellwert überschreitenden Änderung bzw. Abweichung der erfaßten Oberflächenkontur am "leeren" Zustand die Anwesenheit eines Fahrzeugs auf der Verkehrsfläche detektiert werden. Durch Kalibrierung des Projektionsmusters können aus den fotographischen Auswertungen geeichte Abstände abgelesen werden, woraus z.B. die Geschwindigkeit bestimmt werden kann.

Die Erfindung ist demgemäß nicht auf die dargestellten Ausführungsformen beschränkt, sondern umfaßt alle Varianten und Modifikationen, die in den Rahmen der angeschlossenen Ansprüche fallen.

## Patentansprüche

1. Vorrichtung zur Bestimmung von Richtung und/oder Geschwindigkeit eines Fahrzeugs (2) auf einer Fahrbahn (3), **gekennzeichnet durch** einen nach dem Lichtschnitt-Verfahren arbeitenden, auf die Fahrbahn (3) gerichteten Sensor (4) zur Aufnahme der Oberflächenkontur eines Fahrzeugs (2) und eine an den Sensor (4) angeschlossene Auswerteeinrichtung (6), welche aus dem Versatz der Oberflächenkontur in zwei zeitlich aufeinanderfolgenden Aufnahmen (12, 13) die Richtung (r) und/oder Geschwindigkeit (v) des Fahrzeugs (2) ermittelt.

2. Vorrichtung zur Bestimmung des Abstands von Fahrzeugen (2) auf einer Fahrbahn (3), **gekennzeichnet durch** einen nach dem Lichtschnitt-Verfahren arbeitenden, auf einen Abschnitt (14) der Fahrbahn (3) gerichteten Sensor (4) zur Aufnahme der Oberflächenkonturen von Fahrzeugen (3) im Abschnitt (14) sowie eine an den Sensor (4) angeschlossene Auswerteeinrichtung (6), welche aus den Oberflächenkonturen den Abstand (Δa) aufeinanderfolgender Fahrzeuge (2) ermittelt.

3. Vorrichtung nach Anspruch 1 oder 2, **dadurch gekennzeichnet, daß** der Sensor (4) zumindest einen Lichtmusterprojektor (6), der von einem ersten Ort aus ein Lichtmuster (9), bevorzugt Lichtgitter, auf die Fahrbahn (3) projiziert, sowie eine Kamera (7) umfaßt, die von einem zweiten Ort aus das projizierte Lichtmuster (9) aufnimmt und aus dessen Verzerrungen die Oberflächenkontur aufnimmt.

4. Vorrichtung nach den Ansprüchen 2 und 3 für eine Fahrbahn (3) in einem Tunnel (15), **dadurch gekennzeichnet, daß** an der Decke des Tunnels (15) mehrere Lichtmusterprojektoren (7) aufeinanderfolgend montiert sind, welche ein Lichtgitter (9) auf die Fahrbahn (3) projizieren, das von einer gemeinsamen Kamera (10) aufgenommen ist.

5. Vorrichtung nach Anspruch 3 oder 4**, dadurch gekennzeichnet, daß** der Lichtmusterprojektor (7) ein Laser- oder Leuchtdiodenstrahler ist.

6. Vorrichtung nach einem der Ansprüche 3 bis 5, **dadurch gekennzeichnet, daß** die Kamera (10) eine Verkehrsüberwachungskamera ist.

7. Vorrichtung nach einem der Ansprüche 1 bis 6, **dadurch gekennzeichnet, daß** mehrere nebeneinander angeordnete Vorrichtungen (1) im Verbund zusammenarbeiten, um den Verlauf von Fahrzeugbewegungen zu verfolgen.

8. Vorrichtung nach einem der Ansprüche 1 bis 7, **dadurch gekennzeichnet, daß** mehrere nebeneinander angeordnete Sensoren (4) im Verbund von der Auswerteeinrichtung (6) angesteuert und abgefragt werden, um den Verlauf von Fahrzeugbewegungen zu verfolgen.

9. Verfahren zur Bestimmung von Richtung und/oder Geschwindigkeit eines Fahrzeugs (2) auf einer Fahrbahn (3), mit den Schritten
a) Projizieren eines Lichtmusters (9), bevorzugt Lichtgitters, auf die Fahrbahn (3) von einem ersten Ort aus und Aufnehmen des projizierten Lichtmusters (9) von einem zweiten Ort aus, um eine erste Aufnahme (12) der Oberflächenkontur eines Fahrzeugs (2) aus Verzerrungen des Lichtmusters (9) zu erstellen,
b) Wiederholen von Schritt a) zu einem späteren Zeitpunkt, um eine zweite Aufnahme (13) der Oberflächenkontur des Fahrzeugs (2) zu erstellen,
c) Ermitteln der Richtung und Geschwindigkeit des Fahrzeugs (2) aus dem Versatz (Δs) seiner Oberflächenkontur in den beiden Aufnahmen (12, 13).

10. Verfahren zur Bestimmung des Abstands von Fahrzeugen (2) auf einer Fahrbahn (3), mit den Schritten
Projizieren eines Lichtmusters (9), bevorzugt Lichtgitters, auf einen Abschnitt (14) der Fahrbahn (3) von zumindest einem ersten Ort aus,
Aufnehmen des projizierten Lichtmusters (9) von einem zweiten Ort aus, um die Oberflächenkonturen von Fahrzeugen (3) im Abschnitt (14) aus Verzerrungen des Lichtmusters (9) zu erfassen, und
Ermitteln des Abstands (Δa) aufeinanderfolgender Fahrzeuge (3) im Abschnitt (14) aus den erfaßten Oberflächenkonturen.

11. Verfahren nach Anspruch 10, **dadurch gekennzeichnet, daß** das Lichtmuster (9) ein Lichtgitter ist, welches mittels mehrerer im Abschnitt (14) aufeinanderfolgender Lichtmusterprojektoren (7) auf die Fahrbahn (3) projiziert wird.

12. Verfahren nach einem der Ansprüche 9 bis 11, **dadurch gekennzeichnet, daß** das Lichtmuster (9) mit einer Verkehrsüberwachungskamera aufgenommen wird.

## Claims

1. Device for determining the direction and/or speed of a vehicle (2) on a roadway (3), **characterised by** a sensor (5), which operates according to the light-section method and is directed onto the roadway (3), for recording the surface contour of a vehicle (2), and an evaluation unit (6), which is connected to the sensor (4) and determines the direction (r) and/or speed (v) of the vehicle (2) from the displacement in the surface contour in two time-consecutive recordings (12, 13).

2. Device for determining the distance between vehicles (2) on a roadway (3), **characterised by** a sensor (5), which operates according to the light-section method and is directed onto a section (14) of the roadway (3), for recording the surface contours of vehicles (2) in the section (14), and an evaluation unit (6), which is connected to the sensor (4) and determines the distance (Δa) between vehicles (2) following one another from the surface contours.

3. Device according to claim 1 or 2, **characterised in that** the sensor (4) comprises at least one light pattern projector (6), which projects a pattern of light (9), preferably a grid of light, onto the roadway (3) from a first location, as well as a camera (7), which records the projected pattern of light (9) from a second location and records the surface contour from distortions thereof.

4. Device according to claims 2 and 3 for a roadway (3) in a tunnel (15), **characterised in that** multiple light pattern projectors (7) are mounted consecutively on the roof of the tunnel (15), which project a grid of light (9) recorded by a joint camera (10) onto the roadway (3).

5. Device according to claim 3 or 4, **characterised in that** the light pattern projector (7) is a laser or light-emitting diode emitter.

6. Device according to one of claims 3 to 5, **characterised in that** the camera (10) is a traffic monitoring camera.

7. Device according to one of claims 1 to 6, **characterised in that** multiple adjacent devices (1) work together in combination in order to follow the course of movements of vehicles.

8. Device according to one of claims 1 to 7, **characterised in that** multiple adjacent sensors (4) are actuated and scanned by the evaluation unit (6) in order to follow the course of movements of vehicles.

9. Method for determining the direction and/or speed of a vehicle (2) on a roadway (3), with the steps:
a) projecting a pattern of light (9), preferably a grid of light, onto the roadway (3) from a first location and recording the projected pattern of light (9) from a second location in order to create a first recording (12) of the surface contour of a vehicle (2) from distortions of the pattern of light (9),
b) repeating step a) at a later point in time in order to create a second recording (13) of the surface contour of the vehicle (2),
c) determining the direction and speed of the vehicle (2) from the shift (Δs) of its surface contour in the two recordings (12, 13).

10. Method for determining the distance between vehicles (2) on a roadway (3), with the steps:
projecting a pattern of light (9), preferably a grid of light, onto a section (14) of the roadway (3) from at least one first location,
recording the projected pattern of light (9) from a second location in order to detect the surface contours of vehicles (3) in the section (14) from distortions of the pattern of light (9), and
determining the distance (Δa) between vehicles (3) following one another in the section (14) from the detected surface contours.

11. Method according to claim 10, **characterised in that** the pattern of light (9) is a grid of light, which is projected onto the roadway (3) by means of multiple consecutive light pattern projectors (7) in the section (14).

12. Method according to one of claims 9 to 11, **characterised in that** the pattern of light (9) is recorded with a traffic monitoring camera.

## Revendications

1. Dispositif permettant de déterminer la direction et/ou la vitesse d'un véhicule (2) sur une voie de circulation (3), **caractérisé par** un capteur (4) fonctionnant selon un procédé de coupe optique, dirigé vers la voie de circulation (3) et servant à effectuer un relevé du contour de surface d'un véhicule (2), et par un système de traitement (6) qui est relié au capteur (4) et qui détermine la direction (r) et/ou la vitesse (v) du véhicule (2) à partir du décalage du contour de surface dans deux relevés (12, 13) successifs dans le temps.

2. Dispositif permettant de déterminer la distance entre des véhicules (2) sur une voie de circulation (3), **caractérisé par** un capteur (4) fonctionnant selon un procédé de coupe optique, dirigé vers un tronçon (14) de la voie de circulation (3) et servant à effectuer un relevé des contours de surface de véhicules (3) dans le tronçon (14), ainsi que par un système de traitement (6) qui est relié au capteur (4) et qui détermine la distance (Δa) entre des véhicules se suivant (2) à partir des contours de surface.

3. Dispositif selon la revendication 1 ou 2, **caractérisé en ce que** le capteur (4) comporte au moins un projecteur de motif lumineux (6), qui, depuis un premier emplacement, projette un motif lumineux (9), de préférence une grille lumineuse, sur la voie de circulation (3), ainsi qu'une caméra (7) qui, depuis un deuxième emplacement, effectue un relevé du motif lumineux projeté (9) et effectue un relevé du contour de surface à partir des déformations du motif lumineux.

4. Dispositif selon l'une quelconque des revendications 2 et 3 destiné à une voie de circulation (3) dans un tunnel (15), **caractérisé en ce que** plusieurs projecteurs de motif lumineux (7) sont montés les uns derrière les autres au niveau du plafond du tunnel (15) et projettent sur la voie de circulation (3) un grille lumineuse (9) qui est relevée par une caméra commune (10).

5. Dispositif selon la revendication 3 ou 4, **caractérisé en ce que** le projecteur de motif lumineux (7) est un laser ou un projecteur à diodes électroluminescentes.

6. Dispositif selon l'une quelconque des revendications 3 à 5, **caractérisé en ce que** la caméra (10) est une caméra de surveillance de la circulation routière.

7. Dispositif selon l'une quelconque des revendications 1 à 6, **caractérisé en ce que** plusieurs dispositifs (1) placés les uns à côté des autres interagissent ensemble pour suivre le cours de déplacements de véhicules.

8. Dispositif selon l'une quelconque des revendications 1 à 7, **caractérisé en ce que** plusieurs capteurs (4) placés les uns à côté des autres et interagissant ensemble sont commandés et interrogés par le système d'évaluation (6) afin de suivre le cours de déplacements de véhicules.

9. Procédé permettant de déterminer la direction et/ou la vitesse d'un véhicule (2) sur une voie de circulation (3), comprenant les étapes consistant à :
a) projeter un motif lumineux (9), de préférence une grille lumineuse, sur la voie de circulation (3) depuis un premier emplacement et effectuer un relevé du motif lumineux (9) projeté depuis un deuxième emplacement afin d'établir un premier relevé (12) du contour de surface d'un véhicule (2) à partir des déformations du motif lumineux (9),
b) répéter l'étape a) à un instant ultérieur afin d'établir un deuxième relevé (13) du contour de surface du véhicule (2),
c) déterminer la direction et la vitesse du véhicule (2) à partir du décalage (Δs) de son contour de surface dans les deux relevés (12, 13).

10. Procédé permettant de déterminer la distance entre des véhicules (2) sur une voie de circulation (3), comportant les étapes consistant à :
projeter un motif lumineux (9), de préférence une grille lumineuse, sur un tronçon (14) de la voie de circulation (3) depuis au moins un premier emplacement,
effectuer un relevé du motif lumineux (9) projeté depuis un deuxième emplacement afin de détecter les contours de surface de véhicules (3) dans le tronçon (14) à partir des déformations du motif lumineux (9), et
déterminer la distance (Δa) entre les véhicules (3) se suivant dans le tronçon (14) à partir des contours de surface détectés.

11. Procédé selon la revendication 10, **caractérisé en ce que** le motif lumineux (9) est une grille lumineuse qui est projetée sur la voie de circulation (3) au moyen de plusieurs projecteurs de motif lumineux (7) placés successivement dans le tronçon (14).

12. Procédé selon l'une quelconque des revendications 9 à 11, **caractérisé en ce que** le motif lumineux (9) est relevé par une caméra de surveillance de la circulation routière.
